# EUROPEAN PATENT APPLICATION

(11) **EP 4 835 412 A1**
(43) Date of publication of application: **04.11.2026**
(21) Application number: 26172591.5
(22) Date of filing: 15.04.2026
(51) Int. Cl.: G01F 5/00, G01F 1/684, G01F 1/696

(54) **FLOW BYPASS RATIO CALCULATION WITH GAS FACTORS FOR MASS FLOW CONTROLLERS**

(30) Priority: 30.04.2025 US 202563797456 P; 16.03.2026 US 202619568396
(71) Applicant: Illinois Tool Works Inc., Glenview IL 60025 (US)
(72) Inventor: RODRIGUEZ, Michael, Glenview, 60025 (US); KRAMER, Stephen, Glenview, 60025 (US)
(74) Representative: HGF

(57) **Abstract**

A disclosed example flow rate sensor system includes a sensor tube and a bypass pathway dividing flow of a fluid through the system. A bypass ratio of the sensor equals flow rate through the bypass divided by a flow rate through the sensor tube alone. Heater elements for heating a portion of the sensor tube. First and second sensors are arranged upstream and downstream of the heater elements, respectively. A controller is connected to the heater elements and the first and second sensors, operable to receive signals from the first and second sensors corresponding to sensor flow rates of the fluid through the sensor tube, calculate a sensor Reynolds number based on a sensor flow rate, and calculate a total flow rate through the flow rate sensor system based on the sensor Reynolds number.

## Description

### RELATED APPLICATIONS

The present application claims the benefit of U.S. Provisional Patent Application Serial No. 63/797,456, filed April 30, 2025, entitled "FLOW BYPASS RATIO CALCULATION WITH GAS FACTORS FOR MASS FLOW CONTROLLERS." The entirety of U.S. Provisional Patent Application Serial No. 63/797,456 is expressly incorporated herein by reference.

### FIELD OF THE DISCLOSURE

This disclosure is directed generally to flow control and, more particularly, to a flow bypass ratio calculation with gas factors employing mass flow rate sensors.

### BACKGROUND

Mass flow controllers receive a flow of one or more gases, measure the amount of flow of the gases, and control the flow through a control valve. A controller can be used to respond to changes in fluid characteristics, including flow rate, volume, and fluid demand.

### SUMMARY

Disclosed example controllers for valves for mass flow controllers include circuitry to determine and employ flow bypass ratio calculation informed by one or more gas factors, substantially as illustrated by and described in connection with at least one of the figures, as set forth more completely in the claims.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a perspective view of an example valve for a mass flow controller, in accordance with aspects of this disclosure.
FIGS. 2A and 2B illustrate example sensor tubes, in accordance with aspects of this disclosure.
FIG. 3 is an example method to receive sensor data and determine total device flow, in accordance with aspects of this disclosure.

The figures are not necessarily to scale. Wherever appropriate, similar or identical reference numerals are used to refer to similar or identical components.

### DETAILED DESCRIPTION

For the purpose of promoting an understanding of the principles of the claimed technology and presenting its currently understood, best mode of operation, reference will be now made to the embodiments illustrated in the drawings and specific language will be used to describe the same. It will nevertheless be understood that no limitation of the scope of the claimed technology is thereby intended, with such alterations and further modifications in the illustrated device and such further applications of the principles of the claimed technology as illustrated therein being contemplated as would typically occur to one skilled in the art to which the claimed technology relates.

Mass flow controllers are used in applications such as semiconductor manufacturing bioprocessing, thin film, and chemicals processing to deliver precise ratios of gases. In the example of semiconductor manufacturing, gas can be precisely delivered to different regions of a wafer. Such manufacturing applications benefit from faster response times, repeatability of results, and consistency of results, in addition to cost-effectiveness.

Mass flow controllers may include a main conduit having an inlet and an outlet downstream of the inlet. Each includes one or more sensors, such as inlet sensors and outlet sensors, respectively, for measuring flow pressure, flow rate, and/or temperature, as a list of non-limiting examples. A mass flow control valve can be included to control delivery of the fluid flow.

A controller (e.g., control circuit, processor, computer, etc.) can be incorporated with and/or connected to the mass flow rate sensors and/or the valve. The controller can be programmed to control delivery of a desired flow rate through the outlet. For example, the controller can compare an actual (measured) flow rate by a mass flow rate sensor at the outlet. If the difference between the actual, measured flow rate and the desired flow rate exceeds a threshold amount, the controller is programmed to adjust fluid flow through the valve until the actual flow rate is within a predetermined range of the desired flow rate. This type of precision control of the valve can provide improved delivery of such fluids.

Disclosed example controllers are configured to calculate flow through a mass flow measuring device by calculating flow through a sensor tube and/or a bypass pathway. The calculations can include calculating a bypass flow by calculating a sensor Reynolds number that is run through a flow bypass ratio polynomial, which can be determined in a variety of ways, such as empirically.

As disclosed herein, the calculated sensor Reynolds number is used to calculate a flow bypass ratio, which can be used to calculate total device flow. This is particularly effective, as bypass errors are functions of Reynolds number. In some examples, the sensor includes a sensor tube and a bypass pathway dividing fluid flow, such that the bypass ratio equals a flow rate through the bypass divided by a flow rate through the sensor tube alone.

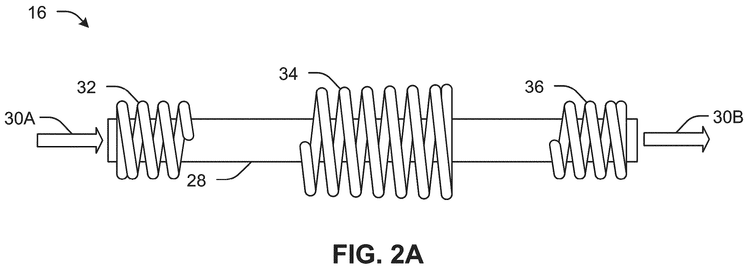

One or more coil elements are arranged between an upstream portion and a downstream portion of the sensor tube. In one embodiment, the center coil (e.g., coil 34 of FIG. 2A) is used as a heater to add power to the system, while the upstream and downstream coils (e.g., coil 32 and 36 of FIG. 2A, respectively) are used as resistance temperature sensors. When fluid is flowing through the tube, a temperature gradient is produced as heat is transferred through the fluid from the upstream to the downstream portion of the tube. The coils are suitable such that the temperature gradient for a desired flow results in a resistance change on the coils which is represented as a voltage. The difference in voltage between these coils then becomes a representation of the temperature gradient, which is itself a representation of the flow through the sensor. In one embodiment, The voltage is calibrated with reference to predetermined flow rates corresponding to one or more gas types, and is compensated with respect to applicable fluid properties to account for differences in heat transfer between fluids. The steady state rate of heat transfer to the fluid from the heater would be dictated by the defining equation of $\dot{Q} = \dot{m} {C}_{p} Δ T .$

Where Q is rate of heat transfer to the fluid flowing through a tube, m is flow rate, Cp is specific heat, and T is change in temperature corresponding to voltage difference.

In fluid dynamics, the Reynolds number (Re) is used to determine the patterns of the fluid flow. For example, fluid flow characteristics may swing between laminar flow (e.g., smooth, even flow) and turbulent flow (e.g., erratic, uneven flow).

The Reynolds number is a dimensionless quantity, able to predict fluid flow patterns by comparing inertial forces of the fluid to viscous forces on the fluid. Analysis indicates a low Reynolds number corresponds to substantially laminar flow, while a high Reynolds number corresponds to a more turbulent flow. Specifically, the Reynolds number of a fluid is a ratio of the inertial and viscous forces. The resulting quantity is therefore dimensionless. The general formula for a Reynolds number is provided in the following Equation 1: $Re = \frac{\left(ρ∗v∗L\right)}{μ}$
where ρ is fluid density, v is fluid velocity, L is characteristic length of the flow cross section, and µ is dynamic viscosity of the given fluid.

The devices and methods disclosed herein are designed to regulate valves for mass flow controllers provide improved stability and accuracy compared with conventional mass flow controllers, as well as improved response times to changing flow rates. One advantage of the disclosed design is to improvements in accuracy of the device when a gas is used for which it was not previously calibrated. Thus, the compensation factors allow for use of a variety of gases, without the need for specific calibration techniques.

Some example precision gas distribution systems employing the valve for mass flow control further include a temperature sensor configured to measure a temperature of the input process gas flow. For example, the control circuitry can be configured to control the valve to regulate gas flow based on the measured temperature.

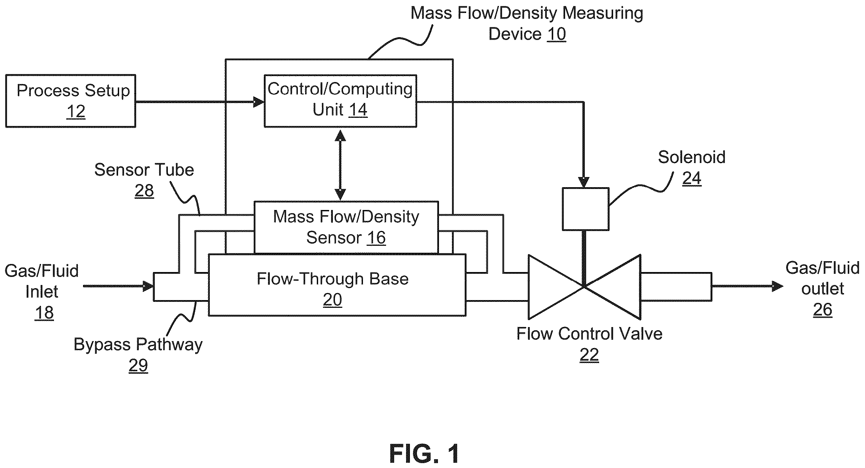

Turning now to the figures, FIG. 1 is a view of an example mass flow and/or density measuring device 10 in which a solenoid valve mass flow controller is employed, in accordance with aspects of this disclosure. The illustrated mass flow measurement and control system 10 includes a process setup 12, a controller or computing unit 14 (e.g., control circuitry), one or more sensors 16. The device 10 is connected to a flow through base 20 to channel a gas/fluid from an inlet 18 to a outlet 26. A flow control valve 22 is arranged between the inlet and the outlet, the flowvalve controlled by a current through a solenoid 24 based on commands from the control unit 14.

As shown in FIG. 1, the gas/fluid at the inlet can be divided between a sensor tube 28 and a bypass pathway 29. For example, the sensor tube 28 diverts a portion of the fluid to the mass flow sensor 16, while the remaining fluid is channeled through the bypass pathway 29. At the downstream portion of the flow through base 20, the sensor tube 28 and the bypass pathway converge, prior to the flow control valve 22. Typically the sensor tube 28 is smaller than the bypass pathway conduit. As disclosed herein, the sensor 16 is configured to measure characteristics of the fluid before and after a heating element, the measurement of which can be communicated to the controller 14. Based on the measurements, the controller 14 controls the solenoid 24 to activate a plunger, which thereby regulates fluid flow through the flow control valve 22.

FIG. 2A provides a detailed view of the sensor 16, which includes sensor tube 28 having an upstream portion to receive incoming fluid 30A and a downstream portion to expel fluid 30B. Connected or otherwise in contact with the sensor tube 28 is an upstream sensor (coil) 32, a downstream sensor (coil) 36, and a heater element or coil 34 arranged between the two sensors.

In some examples, the heater coil 34 applies a constant heat flux to the sensor tube 28. The upstream and downstream coils generate a voltage which is proportional to the change in resistance of the coils due to the temperature. When fluid flows through the tube 28, internal convection creates a temperature gradient between the upstream sensor 32 and the downstream sensor 36 that is proportional to the mass flow through the sensor tube 28. This temperature gradient creates the voltage difference between upstream sensor 32 and the downstream sensor 36 and becomes the raw signal for the thermal mass flow device.

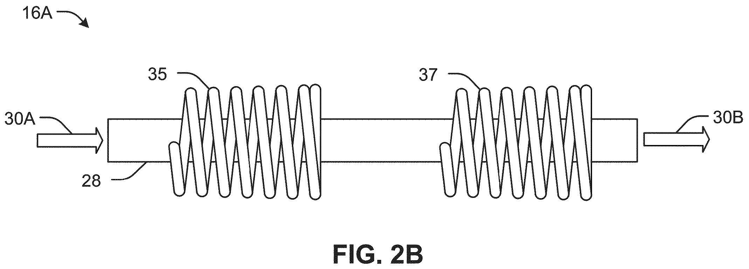

In the example illustrated in FIG. 2B, an upstream coil sensing element 282 and a downstream sensing element 284 is thermally coupled to the flow path provided by the flow sensor conduit 268. In this example, each coil 35, 37 can be used as a heating element, as a sensor, or both. For instance, current can be supplied to each coil to generate heat, and/or can be used to measure a difference in voltage between the coils. As disclosed herein, this difference represents the temperature gradient between the coils, which is a representation of the flow through the sensor.

In some examples, a controller is connected to the first and second coils, configured to apply power to one or both of the first and second coils to generate heat (e.g., resistive heat, as a heating element). The controller can receive signals from the other of the first and second coils, the signals corresponding to sensor flow rates of the fluid through the sensor tube. By these signals, the controller can calculate a sensor Reynolds number based on a sensor flow rate, and the calculate a total flow rate through the flow rate sensor system based on the sensor Reynolds number.

In some examples, the controller applies the power to the first or second coil and receives the signals from the first or second coils in an alternating pattern, which can be simultaneous (e.g., heating a first coil while sensing from a second coil). In other examples, each coil can be heated/generating signals at a predetermined pattern, which can be shared between coils or different for each coil.

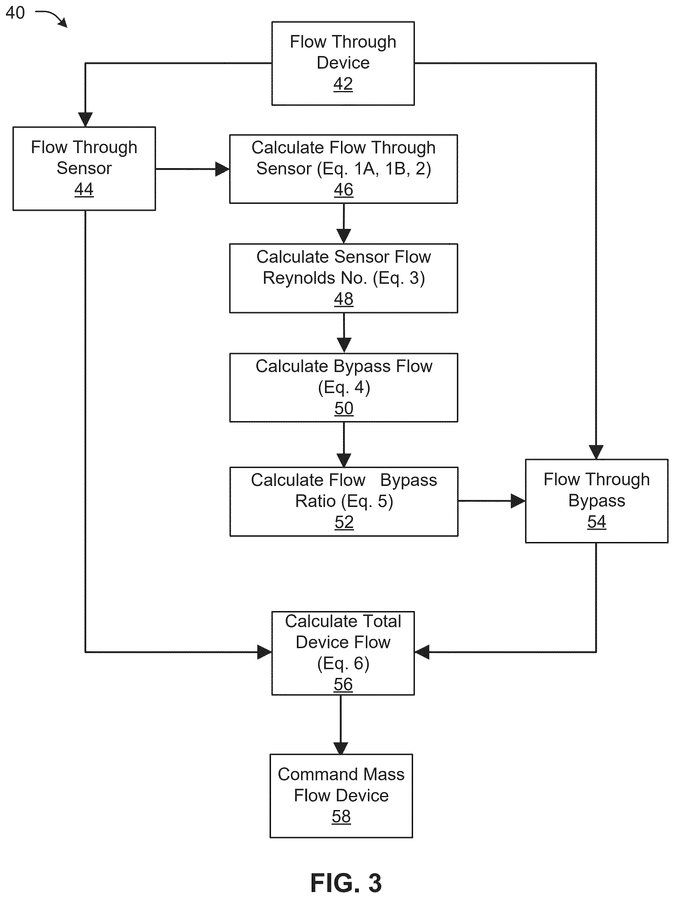

FIG. 3 illustrates an example process 40 for calculating the total device flow for a mass flow controller, employing a Reynolds number calculation. The process 40 can be any method or algorithm for calculating the total device flow, including via a controller, control circuitry, and/or computing device (e.g., controller 14).

The example process thereby provides compensation for the Reynolds losses of different gases. The Reynolds number is useful due to the fact that bypass errors are a function of the Reynolds number, and that the bypass ratio error can be corrected for using the Reynolds number of the sensor tube, as explained with respect to FIG. 3.

As shown in block 42, gas/fluid is channeled through the mass flow controller. For example, gas/fluid can be provided at the inlet 18.

In block 44, a portion of the gas/fluid is diverted through the sensor tube 28 and into the sensor device 16.

In block 46, the flow through the sensor is calculated. For example, as an initial step, a raw sensor signal gets a zero flow temperature compensation (ZTC) value applied at the current zero value. This is done using the below Equations 1A and 1B: $Δ {V}_{Zeroed} = Δ V - Δ {V}_{ZTC} - Δ {V}_{0}$ where $Δ {V}_{0} = Δ V - Δ {V}_{ZTC} @ Zero Flow Condition$

The sensor signal then runs through a dedicated sensor flow polynomial (which can be determined empirically), using the calculated ΔV_{Zeroed} from Equation 1A. Flow through the sensor can be calculated via Equation 2, below. The Qₛₑₙₛₒᵣ is adjusted for a specific type of gas being channeled through the sensor by use of ΔV_{Zeroed} for a given type of gas. Equation 2: ${Q}_{Sensor} = \left({C}_{n}Δ{V}_{Zeroed}^{n}+⋯+{C}_{1}Δ{V}_{Zeroed}+{B}_{o}\right) SF$
wherein Qₛₑₙₛₒᵣ is fluid flow through the sensor, Cₙ, Cₙ₋₁,... C, , and Bₒ are polynomial coefficients obtained experimentally or simulated numerically to map the sensor voltage to sensor flow, and SF is a gas conversion factor, which is a function of calibration gas and process gas fluid properties (e.g., the specific heat of the gas, derived from heat transfer). In some embodiments, this conversion factor may be of the form, SF *= f*(*C_{p,cal gas}, C_{p,process gas}*)*,* which can be a fixed value for each fluid, or which may incorporate temperature and/or pressure dependency.

Although some examples are provided where the Qₛₑₙₛₒᵣ is determined by a polynomial equation, in some examples a listing, such as a linearization table, can be referenced mapping voltage to flow rates.

In block 48, the sensor flow is then used to calculate the sensor Reynolds number by Equation 3, below, using the sensor fluid flow through the sensor of Equation 2. $Re = {X}_{Re} {Q}_{sensor}$
wherein Re is the Reynolds number of the sensor flow, Qₛₑₙₛₒᵣ is the sensor flow calculated from Equation 2, and X_{Re} is a scaling factor which takes into account the fluid properties in the non-dimensional value of Re, such as density and viscosity of a particular gas. The scaling factor may be employed as a static factor derived as a ratio of density and viscosity of the a single gas, or the factor may be derived as a ratio of a process gas with respect to a calibration gas. Alternatively or additionally, the Re factor may be a employed as a function of pressure and/or temperature as may be advantageous to a given scenario.

In block 50, Q_{Bypass} can be calculated as a Q_{FlowCalStandard} less the value of Qₛₑₙₛₒᵣ, as provided in Equation 4, below. $FBR = \frac{{Q}_{FlowCalStandard} - {Q}_{sensor}}{{Q}_{sensor}} = \frac{{Q}_{Bypass}}{{Q}_{sensor}}$
which can be rewritten as to solve for Q_{Bypass} as shown below: ${Q}_{Bypass} = {Q}_{sensor} FBR$

In block 52, the sensor Reynolds number Re from Equation 3 is then run through the flow bypass ratio (FBR) polynomial from Equation 4 (which can be determined empirically). The FBR is a ratio of the flow of the bypass pathway (Q_{Bypass}) and the flow of the sensor tube (Qₛₑₙₛₒᵣ).

The flow bypass ratio (FBR) polynomial is provided in Equation 5, below: $FBR = \left({C}_{Re , n}{Re}^{n}+⋯+{C}_{Re , 1}Re+{B}_{Re}\right)$
wherein FBR is the flow bypass ratio, C_{Re,n}, ... , and C_{Re,1}, and B_{Re} are polynomial coefficients of a bypass ratio curve versus Reynolds number obtained experimentally or simulated numerically for each gas, Re is the sensor Reynolds number as calculated by sensor flow and Reynolds scaling factor outlined above.

Once FBR is calculated, Q_{Bypass} can be calculated using Equation 4.

In block 54, flow of the gas/fluid is channeled through the bypass pathway.

As shown in block 56, with both flow through sensor and bypass having been calculated, the total device flow is calculated via Equation 6, below. ${Q}_{Device} = {Q}_{Bypass} + {Q}_{sensor}$

In block 58, the controller commands a change in one or more component of the mass flow device based on the calculated value of the total device flow. For example, the controller can command activation or deactivation of the solenoid to change position of the valve to control flow of the fluid through the flow body.

In some embodiments, the example controller/control circuitry 14 may be an integrated processing system, a programmable logic controller, a general-purpose computer, a laptop computer, a tablet computer, and/or any other type of processing system configured to communicate with the sensors and/or the valve. For example, the control circuitry can include a processor, memory, and a storage device. The example processor may be any general purpose central processing unit (CPU) from any manufacturer. In some other examples, the processor may include one or more specialized processing units, such as RISC processors with an ARM core, graphic processing units, digital signal processors, and/or system-on-chips (SoC). The processor executes machine readable instructions that may be stored locally at the processor (e.g., in an included cache or SoC), in the memory (e.g., a random access memory or other volatile memory, a read only memory or other non-volatile memory such as FLASH memory, and/or in the storage device. The example storage device may be a hard drive, a solid state storage drive, a hybrid drive, a RAID array, and/or any other mass data storage device.

In disclosed examples, a flow rate sensor system includes a sensor tube and a bypass pathway dividing flow of a fluid through the system, wherein a bypass ratio of the sensor equals a bypass flow rate divided by a flow rate through the sensor tube; heater elements for heating a portion of the sensor tube; a first sensor arranged upstream of the heater elements, and a second sensor arranged downstream of the heater elements; and a controller connected to the heater elements and the first and second sensors. In examples, the controller is operable to receive signals from the first and second sensors corresponding to sensor flow rates of the fluid through the sensor tube; calculate a sensor Reynolds number based on a sensor flow rate; and calculate a total flow rate through the flow rate sensor system based on the sensor Reynolds number.

In some examples, the controller is further configured to measure the flow rate through the first and second sensors based on a measured voltage across the first and second sensors.

In some examples, the controller is further configured to calculate the sensor Reynolds number by using the value of the sensor fluid flow based on the following equation $Re = {X}_{Re} {Q}_{sensor}$
wherein Re is the sensor Reynolds number, Qsensor is a value of the sensor fluid flow, and X_{Re} is a scaling factor derived from ρfluid, fluid density, and ρfluid, fluid viscosity.

In some examples, the X_{Re} is calculated as a function of either pressure, temperature or both.

In some examples, the controller is further configured to calculate the sensor Reynolds number by using the value of the sensor fluid flow based on the following equation $Re = {X}_{Re} {Q}_{sensor}$
wherein Re is the sensor Reynolds number, Qₛₑₙₛₒᵣ is a value of the sensor fluid flow, and X_{Re} is a scaling factor derived from fluid density and viscosity of the measured gas with respect to a process gas .

In some examples, X_{Re} is employed as a function of either pressure, temperature or both.

In some examples, the controller is further configured to calculate flow bypass ratio (FBR) using a polynomial based on the sensor Reynolds number, wherein the polynomial is provided in the following equation $FBR = \left({C}_{Re , n}{Re}^{n}+⋯+{C}_{Re , 1}Re+{B}_{Re}\right)$
wherein FBR is the flow bypass ratio, C_{Re,n}, ... , and C_{Re,1} , and B_{Re} are polynomial coefficients of a bypass ratio curve versus Reynolds number, and Re is the sensor Reynolds number.

In some examples, the FBR is a ratio of the flow of the bypass pathway (Q_{Bypass}) and the flow of the sensor tube (Qₛₑₙₛₒᵣ).

In some examples, the total flow includes the sensor flow and a bypass flow.

In some examples, the heater elements are one or more coils configured to heat the sensor tube, the heater elements controllable by the controller.

In some examples, the first and second sensors are one or more coils configured to generate a current during flow of the fluid, the first and second sensors connected to the controller.

In some disclosed examples, a flow rate sensor system includes a sensor tube and a bypass pathway dividing flow of a fluid through the system; a first coil for heating or sensing along a first portion of the sensor tube; a second coil for heating or sensing along a second portion of the sensor tube; a controller connected to the first and second coils. In examples, the controller is configured to apply power to the first and second coils to generate heat; receive signals from the first and second sensors corresponding to sensor flow rates of the fluid through the sensor tube; calculate a sensor Reynolds number based on a sensor flow rate; and calculate a total flow rate through the flow rate sensor system based on the sensor Reynolds number.

In some examples, the controller is configured to apply the power and receive the signals from the first or second coils in an alternating pattern.

In some examples, the controller is configured to apply the power to the first coil while receiving signals from the second coils.

In some examples, the controller is further configured to calculate the sensor Reynolds number by using the value of the sensor fluid flow based on the following equation $Re = {X}_{Re} {Q}_{sensor}$
wherein Re is the sensor Reynolds number, Qₛₑₙₛₒᵣ is a value of the sensor fluid flow, and X_{Re} is a scaling factor derived from ρfluid, fluid density, and ρfluid, fluid viscosity.

In some examples, X_{Re} is calculated as a function of either pressure, temperature or both.

In some examples, the controller is further configured to calculate the sensor Reynolds number by using the value of the sensor fluid flow based on the following equation $Re = {X}_{Re} {Q}_{sensor}$
wherein Re is the sensor Reynolds number, Qsensor is a value of the sensor fluid flow, and X_{Re} is a scaling factor derived from fluid density and viscosity of the measured gas with respect to a process gas .

In some examples, X_{Re} is employed as a function of either pressure, temperature or both.

In some examples, the controller is further configured to calculate flow bypass ratio (FBR) using a polynomial based on the sensor Reynolds number, wherein the polynomial is provided in the following equation $FBR = \left({C}_{Re , n}{Re}^{n}+⋯+{C}_{Re , 1}Re+{B}_{Re}\right)$
wherein FBR is the flow bypass ratio, C_{Re,n}, ... , and C_{Re,1} , and B_{Re} are polynomial coefficients of a bypass ratio curve versus Reynolds number, and Re is the sensor Reynolds number.

In some examples, the FBR is a ratio of the flow of the bypass pathway (Q_{Bypass}) and the flow of the sensor tube (Qₛₑₙₛₒᵣ).

As utilized herein, "and/or" means any one or more of the items in the list joined by "and/or". As an example, "x and/ory" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations.

While the present method and/or system has been described with reference to certain implementations, it will be understood by those skilled in the art that various changes may be made, and equivalents may be substituted without departing from the scope of the present method and/or system. For example, block and/or components of disclosed examples may be combined, divided, re-arranged, and/or otherwise modified. In addition, many modifications may be made to adapt a particular situation or material to the teachings of the present disclosure without departing from its scope. Therefore, the present method and/or system are not limited to the particular implementations disclosed. Instead, the present method and/or system will include all implementations falling within the scope of the appended claims, both literally and under the doctrine of equivalents.
Certain embodiments of the invention are described in the following clauses:
Clause 1. A flow rate sensor system, comprising:
   a sensor tube and a bypass pathway dividing flow of a fluid through the system, wherein a bypass ratio of the sensor equals a bypass flow rate divided by a flow rate through the sensor tube;
   heater elements for heating a portion of the sensor tube;
   a first sensor arranged upstream of the heater elements, and a second sensor arranged downstream of the heater elements;
   a controller connected to the heater elements and the first and second sensors,
   wherein the controller is configured to:
   receive signals from the first and second sensors corresponding to sensor flow rates of the fluid through the sensor tube;
   calculate a sensor Reynolds number based on a sensor flow rate; and
   calculate a total flow rate through the flow rate sensor system based on the sensor Reynolds number.
Clause 2. The flow rate sensor system of clause 1, wherein the controller is further configured to measure the flow rate through the first and second sensors based on a measured voltage across the first and second sensors.
Clause 3. The flow rate sensor system of clause 1, wherein the controller is further configured to calculate the sensor Reynolds number by using the value of the sensor fluid flow based on the following equation $Re = {X}_{Re} {Q}_{sensor}$ wherein Re is the sensor Reynolds number, Qₛₑₙₛₒᵣ is a value of the sensor fluid flow, and X_{Re} is a scaling factor derived from ρ_{fluid}, fluid density, and µ_{fluid}, fluid viscosity.
Clause 4. The flow rate sensor system of clause 3, wherein X_{Re} is calculated as a function of either pressure, temperature or both.
Clause 5. The flow rate sensor system of clause 1, wherein the controller is further configured to calculate the sensor Reynolds number by using the value of the sensor fluid flow based on the following equation $Re = {X}_{Re} {Q}_{sensor}$ wherein Re is the sensor Reynolds number, Qₛₑₙₛₒᵣ is a value of the sensor fluid flow, and X_{Re} is a scaling factor derived from fluid density and viscosity of the measured gas with respect to a process gas .
Clause 6. The flow rate sensor system of clause 5, wherein X_{Re} is employed as a function of either pressure, temperature or both.
Clause 7. The flow rate sensor system of clause 3, wherein the controller is further configured to calculate flow bypass ratio (FBR) using a polynomial based on the sensor Reynolds number, wherein the polynomial is provided in the following equation $FBR = \left({C}_{Re , n}{Re}^{n}+⋯+{C}_{Re , 1}Re+{B}_{Re}\right)$ wherein FBR is the flow bypass ratio, C_{Re,n}, ... , and C_{Re,1}, and B_{Re} are polynomial coefficients of a bypass ratio curve versus Reynolds number, and Re is the sensor Reynolds number.
Clause 8. The flow rate sensor system of clause 7, wherein the FBR is a ratio of the flow of the bypass pathway (Q_{Bypass}) and the flow of the sensor tube (Qₛₑₙₛₒᵣ).
Clause 9. The flow rate sensor system of clause 1, wherein the total flow includes the sensor flow and a bypass flow.
Clause 10. The flow rate sensor system of clause 1, wherein the heater elements are one or more coils configured to heat the sensor tube, the heater elements controllable by the controller.
Clause 11. The flow rate sensor system of clause 1, wherein the first and second sensors are one or more coils configured to generate a current during flow of the fluid, the first and second sensors connected to the controller.
Clause 12. A flow rate sensor system, comprising:
   a sensor tube and a bypass pathway dividing flow of a fluid through the system;
   a first coil for heating or sensing along a first portion of the sensor tube;
   a second coil for heating or sensing along a second portion of the sensor tube;
   a controller connected to the first and second coils, wherein the controller is configured to:
      apply power to the first and second coils to generate heat;
      receive signals from the first and second sensors corresponding to sensor flow rates of the fluid through the sensor tube;
      calculate a sensor Reynolds number based on a sensor flow rate; and
      calculate a total flow rate through the flow rate sensor system based on the sensor Reynolds number.
Clause 13. The flow rate sensor system of clause 12, wherein the controller is configured to apply the power and receive the signals from the first or second coils in an alternating pattern.
Clause 14. The flow rate sensor system of clause 12, wherein the controller is configured to apply the power to the first coil while receiving signals from the second coils.
Clause 15. The flow rate sensor system of clause 12, wherein the controller is further configured to calculate the sensor Reynolds number by using the value of the sensor fluid flow based on the following equation $Re = {X}_{Re} {Q}_{sensor}$ wherein Re is the sensor Reynolds number, Qₛₑₙₛₒᵣ is a value of the sensor fluid flow, and X_{Re} is a scaling factor derived from ρ_{fluid}, fluid density, and µ_{fluid}, fluid viscosity.
Clause 16. The flow rate sensor system of clause 15, wherein X_{Re} is calculated as a function of either pressure, temperature or both.
Clause 17. The flow rate sensor system of clause 12, wherein the controller is further configured to calculate the sensor Reynolds number by using the value of the sensor fluid flow based on the following equation $Re = {X}_{Re} {Q}_{sensor}$ wherein Re is the sensor Reynolds number, Qₛₑₙₛₒᵣ is a value of the sensor fluid flow, and X_{Re} is a scaling factor derived from fluid density and viscosity of the measured gas with respect to a process gas .
Clause 18. The flow rate sensor system of clause 17, wherein X_{Re} is employed as a function of either pressure, temperature or both.
Clause 19. The flow rate sensor system of clause 15, wherein the controller is further configured to calculate flow bypass ratio (FBR) using a polynomial based on the sensor Reynolds number, wherein the polynomial is provided in the following equation $FBR = \left({C}_{Re , n}{Re}^{n}+⋯+{C}_{Re , 1}Re+{B}_{Re}\right)$ wherein FBR is the flow bypass ratio, C_{Re,n}, ... , and C_{Re,1}, and B_{Re} are polynomial coefficients of a bypass ratio curve versus Reynolds number, and Re is the sensor Reynolds number.
Clause 20. The flow rate sensor system of clause 19, wherein the FBR is a ratio of the flow of the bypass pathway (Q_{Bypass}) and the flow of the sensor tube (Qₛₑₙₛₒᵣ).

## Claims

1. A flow rate sensor system, comprising:
a sensor tube and a bypass pathway dividing flow of a fluid through the system, wherein a bypass ratio of the sensor equals a bypass flow rate divided by a flow rate through the sensor tube;
heater elements for heating a portion of the sensor tube;
a first sensor arranged upstream of the heater elements, and a second sensor arranged downstream of the heater elements;
a controller connected to the heater elements and the first and second sensors,
wherein the controller is configured to:
receive signals from the first and second sensors corresponding to sensor flow rates of the fluid through the sensor tube;
calculate a sensor Reynolds number based on a sensor flow rate; and
calculate a total flow rate through the flow rate sensor system based on the sensor Reynolds number.

2. The flow rate sensor system of claim 1, wherein the controller is further configured to measure the flow rate through the first and second sensors based on a measured voltage across the first and second sensors.

3. The flow rate sensor system of claim 1 or claim 2, wherein the controller is further configured to calculate the sensor Reynolds number by using the value of the sensor fluid flow based on the following equation $Re = {X}_{Re} {Q}_{sensor}$
wherein Re is the sensor Reynolds number, Qₛₑₙₛₒᵣ is a value of the sensor fluid flow, and X_{Re} is a scaling factor derived from ρ_{fluid}, fluid density, and µ_{fluid}, fluid viscosity, and optionally
wherein X_{Re} is calculated as a function of either pressure, temperature or both.

4. The flow rate sensor system of any one of claims 1 to 3, wherein the controller is further configured to calculate the sensor Reynolds number by using the value of the sensor fluid flow based on the following equation $Re = {X}_{Re} {Q}_{sensor}$
wherein Re is the sensor Reynolds number, Qₛₑₙₛₒᵣ is a value of the sensor fluid flow, and X_{Re} is a scaling factor derived from fluid density and viscosity of the measured gas with respect to a process gas, and optionally
wherein X_{Re} is employed as a function of either pressure, temperature or both.

5. The flow rate sensor system of claim 3 or claim 4, wherein the controller is further configured to calculate flow bypass ratio (FBR) using a polynomial based on the sensor Reynolds number, wherein the polynomial is provided in the following equation $FBR = \left({C}_{Re , n}{Re}^{n}+⋯+{C}_{Re , 1}Re+{B}_{Re}\right)$ wherein FBR is the flow bypass ratio, C_{Re,n}, ... , and C_{Re,1}, and B_{Re} are polynomial coefficients of a bypass ratio curve versus Reynolds number, and Re is the sensor Reynolds number.

6. The flow rate sensor system of claim 5, wherein the FBR is a ratio of the flow of the bypass pathway (Q_{Bypass}) and the flow of the sensor tube (Qₛₑₙₛₒᵣ).

7. The flow rate sensor system of any one of claims 1 to 6, wherein the total flow includes the sensor flow and a bypass flow.

8. The flow rate sensor system of any one of claims 1 to 7, wherein the heater elements are one or more coils configured to heat the sensor tube, the heater elements controllable by the controller.

9. The flow rate sensor system of any one of claims 1 to 8, wherein the first and second sensors are one or more coils configured to generate a current during flow of the fluid, the first and second sensors connected to the controller.

10. A flow rate sensor system, comprising:
a sensor tube and a bypass pathway dividing flow of a fluid through the system;
a first coil for heating or sensing along a first portion of the sensor tube;
a second coil for heating or sensing along a second portion of the sensor tube;
a controller connected to the first and second coils, wherein the controller is configured to:
apply power to the first and second coils to generate heat;
receive signals from the first and second sensors corresponding to sensor flow rates of the fluid through the sensor tube;
calculate a sensor Reynolds number based on a sensor flow rate; and
calculate a total flow rate through the flow rate sensor system based on the sensor Reynolds number.

11. The flow rate sensor system of claim 10, wherein the controller is configured to apply the power and receive the signals from the first or second coils in an alternating pattern.

12. The flow rate sensor system of claim 10 or claim 11, wherein the controller is configured to apply the power to the first coil while receiving signals from the second coils.

13. The flow rate sensor system of any one of claims 10 to 12, wherein the controller is further configured to calculate the sensor Reynolds number by using the value of the sensor fluid flow based on the following equation $Re = {X}_{Re} {Q}_{sensor}$
wherein Re is the sensor Reynolds number, Qₛₑₙₛₒᵣ is a value of the sensor fluid flow, and X_{Re} is a scaling factor derived from ρ_{fluid}, fluid density, and µ_{fluid}, fluid viscosity, and optionally
wherein X_{Re} is calculated as a function of either pressure, temperature or both.

14. The flow rate sensor system of any one of claims 10 to 13, wherein the controller is further configured to calculate the sensor Reynolds number by using the value of the sensor fluid flow based on the following equation $Re = {X}_{Re} {Q}_{sensor}$
wherein Re is the sensor Reynolds number, Qₛₑₙₛₒᵣ is a value of the sensor fluid flow, and X_{Re} is a scaling factor derived from fluid density and viscosity of the measured gas with respect to a process gas, and optionally
wherein X_{Re} is employed as a function of either pressure, temperature or both.

15. The flow rate sensor system of claim 13 or claim 14, wherein the controller is further configured to calculate flow bypass ratio (FBR) using a polynomial based on the sensor Reynolds number, wherein the polynomial is provided in the following equation $FBR = \left({C}_{Re , n}{Re}^{n}+⋯+{C}_{Re , 1}Re+{B}_{Re}\right)$
wherein FBR is the flow bypass ratio, C_{Re,n}, ... , and C_{Re,1}, and B_{Re} are polynomial coefficients of a bypass ratio curve versus Reynolds number, and Re is the sensor Reynolds number, and optionally
wherein the FBR is a ratio of the flow of the bypass pathway (Q_{Bypass}) and the flow of the sensor tube (Qₛₑₙₛₒᵣ).
